(19) Europäisches Patentamt
European Patent Office
Office européen des brevets

(11) **EP 2 990 176 B1**

(12) **EUROPEAN PATENT SPECIFICATION**

(45) Date of publication and mention
of the grant of the patent:
**01.08.2018 Bulletin 2018/31**

(51) Int Cl.:
**B29C 49/22** (2006.01)     **B29C 49/06** (2006.01)
**B65D 1/00** (2006.01)     **B65D 1/02** (2006.01)

(21) Application number: **14787858.1**

(22) Date of filing: **24.04.2014**

(86) International application number:
**PCT/JP2014/061565**

(87) International publication number:
**WO 2014/175378 (30.10.2014 Gazette 2014/44)**

(54) **A PROCESS FOR PRODUCING A BLOW-MOLDED CONTAINER WITH EXCELLENT SLIPPERINESS IN RELATION TO FLOWABLE CONTENTS**

VERFAHREN ZUR HERSTELLUNG EINES BEHÄLTERS MIT HERVORRAGENDER GLEITFÄHIGKEIT IN BEZUG AUF FLIESSFÄHIGE INHALTE

PROCÉDÉ DE PRODUCTION D'UN CONTENANT MOULÉ PAR SOUFFLAGE AYANT D'EXCELLENTES PROPRIÉTÉS DE GLISSEMENT VIS-À-VIS DE CONTENUS COULANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2013 JP 2013091244**

(43) Date of publication of application:
**02.03.2016 Bulletin 2016/09**

(73) Proprietor: **Toyo Seikan Group Holdings, Ltd.**
**Shinagawa-ku,**
**Tokyo 1418627 (JP)**

(72) Inventors:
• **AKUTSU, Yosuke**
**Yokohama-shi**
**Kanagawa 240-0062 (JP)**
• **IWAMOTO, Shinya**
**Yokohama-shi**
**Kanagawa 240-0062 (JP)**
• **HORIUCHI, Shigetoshi**
**Yokohama-shi**
**Kanagawa 240-0062 (JP)**
• **OKAMOTO, Kota**
**Yokohama-shi**
**Kanagawa 240-0062 (JP)**

(74) Representative: **J A Kemp**
**14 South Square**
**Gray's Inn**
**London WC1R 5JJ (GB)**

(56) References cited:
**EP-A1- 2 123 571      WO-A1-2012/137755**
**WO-A2-2007/120807      JP-A- H08 113 244**
**JP-A- H08 113 244      JP-A- H10 129 642**
**JP-A- 2001 354 222      JP-A- 2004 160 935**

**Description**

This invention relates to a process for producing a blow-formed container having excellent slipping property for the fluid contents and, particularly, for the fluid contents having high viscosity.

Background Art:

Plastic containers are easy to form, can be inexpensively produced and have, therefore, been widely used in a variety of applications. Specifically, an olefin resin container of the shape of a bottle of which the inner wall surface is formed by using an olefin resin such as low-density polyethylene and which is formed by direct blow-forming, has been desirably used as a container for containing viscous slurry-like or paste-like fluid contents such as ketchup and the like from such a standpoint that the content can be easily squeezed out.

Further, the bottles containing highly viscous fluid contents are, in many cases, preserved in an inverted state to quickly discharge the contents or to use the contents to the last drop without leaving them in the bottle. It is, therefore, desired that when the bottle is inverted, the viscous content quickly falls down without adhering or staying on the inner wall surface of the bottle.

To satisfy such requirements, for example, a patent document 1 proposes a bottle of a multilayer structure of which the innermost layer is formed of an olefin resin having an MFR (melt flow rate) of not less than 10 g/10 min.

The innermost layer of this multilayer structure bottle has excellent wettability for the oily content. Therefore, if the bottle is inverted or is tilted, then the oily content such as mayonnaise or the like falls down spreading along the surface of the innermost layer and can be completely discharged without adhering or remaining on the inner wall surface of the bottle (on the surface of the innermost layer).

As for the bottles for containing viscous non-oily contents in which plant fibers are dispersed in water like ketchup, a patent document 2 and a patent document 3 are disclosing polyolefin resin bottles having an innermost layer which is blended with a saturated or unsaturated aliphatic amide as a lubricating agent.

The above patent documents 1 to 3 are all trying to improve slipping property of the plastic containers for the contents based on the chemical compositions of the thermoplastic resin compositions forming the inner surfaces of the containers, and are achieving improvements in the slipping property to some extent. However, limitation is imposed on improving the slipping property due to limitation on the kinds of the thermoplastic resins that are used and on the additives, and striking improvement has not been achieved yet.

On the other hand, a patent document 4 is proposing a packing material comprising a composition that contains an additive having an HLB of not more than 5.0 in an amount in a range of 0.3 to 3 parts by weight per 100 parts by weight of the polyolefin resin.

The packing material of the patent document 4 permits emulsified contents such as chocolate creams, custard creams and the like to be excellently separated away therefrom. That is, the packing material permits the emulsified contents to adhere thereto little and makes it possible to alleviate such an inconvenience that the content adheres in large amounts to, for example, the inner surface of the lid member.

According to the study by the present inventors, however, the containers made from the above composition are not still capable of exhibiting improved slipping property for the fluid contents such as sauce and the like.

Further, the present inventors have previously proposed a container of which the inner surface or the surface that comes in contact with the content is a liquid permeable surface and which is holding a liquid in the liquid permeable surface (Japanese Patent Application No. 2012-199236) and a container of which the inner surface is formed by using a resin composition that contains a resin for forming and a liquid (liquid immiscible with the content (Japanese Patent Application No. 2013-23468). These containers are forming a liquid layer at a portion that comes in contact with the content, and exhibit very improved slipping property for the fluid contents such as ketchup, saurce, mayonnaise and the like.

However, these containers are still accompanied by a problem of difficulty in thinly and uniformly forming the liquid layer for enhancing slipping property for the content and a problem of necessity for mixing the liquid in large amounts into the resin that forms the inner surface. Therefore, further improvements are necessary. That is, according to Japanese Patent Application No. 2012-199236, after the container has been formed, the liquid is applied by such means as spraying onto the portion that comes in contact with the content. Therefore, the liquid layer tends to be formed too thick and, therefore, the liquid tends to migrate into the content. According to Japanese Patent Application No. 2013-23468, on the other hand, the container is formed by mixing the liquid into the resin for forming. Here, the liquid layer is formed on the inner surface of the container as it is bled out from the blended resin that is forming the inner layer. Therefore, the liquid that was not bled out often remains in the resin layer that forms the inner layer resulting in a waste of the liquid.

Patent document 5 describes a polyolefin-based container in which an olefin resin layer containing an ethylene-bis (fatty acid amide) is formed on the inner surface, and which bleeds on the inner surface of the container in an amount of 12.5 to 200 mg/m$^2$.

Patent document 6 describes a container coated with a silicone compound at the inside wall of a cylindrical container made of synthetic resin.

Patent document 7 describes an apparatus and method for simultaneously forming and filling a plastic container involving blow-forming.

Prior Art Documents:

Patent Documents:

Patent document 1: JP-A-2007-284066
Patent document 2: JP-A-2008-222291
Patent document 3: JP-A-2009-214914
Patent document 4: JP-A-6-345903
Patent document 5: WO 2012/137755
Patent document 6: JP-H08-113244
Patent document 7: WO 2007/120807

Further processes of blow forming containers with slipping properties on the inside are disclosed in EP2123571, WO2012137755 and JPH08113244.

WO2007120807 discloses a process for producing a blow-formed container by blowing a fluid for blow forming into a container preform formed by extruding or injecting a molten resin to form the container preform into the shape of a container, wherein the fluid for blow forming is blown under a condition where a liquid is present in space in said preform.

Outline of the Invention:

Problems that the Invention is to Solve:

It is, therefore, an object of the present invention to provide a container having a liquid layer that is thinly and uniformly formed on the inner surface thereof, the liquid layer exhibiting slipping property for the fluid contents.

Means for Solving the Problems:

The present inventors have conducted experiments and studies extensively concerning the means for forming a layer of a liquid on the inner surfaces of the containers, have discovered the fact that the layer of the liquid can be thinly and uniformly formed over the whole inner surfaces of the containers if the containers are blow-formed by feeding a fluid for blow forming under a condition where the liquid is present, and have thus completed the present invention.

That is, according to the present invention, there is provided a process for producing a blow-formed container having a liquid layer formed in an amount of not more than 10 g/m$^2$ on the whole inner surface of the stretched portion thereof, wherein said liquid layer is formed of a liquid having a boiling point higher than a blowing temperature, and wherein a contact angle $\theta^*$ of said liquid is not more than 40 degrees on the resin that is forming the innermost layer; wherein said process comprises blowing a fluid for blow forming into a container preform formed by extruding or injecting a molten resin to form the container preform into the shape of a container, wherein the fluid for blow forming is blown under a condition where said liquid is present in space in said preform.

In the process of the present invention, it is desired that:

(1) The liquid is fed into the space in said preform together with the fluid for blow forming;
(2) The fluid for blow forming is blown in a state where the inner surface of the container preform has been coated with said liquid;
(3) The liquid forming said liquid layer has a viscosity of 1 to 1000 mPa·s (23°C);
(4) The liquid layer is so formed that the covering ratio F represented by the following formula (1),

$$F = (\cos\,\theta - \cos\,\theta_B)/(\cos\,\theta_A - \cos\,\theta_B) \qquad (1)$$

wherein $\theta$ is a water contact angle on the inner surface of the container,

$\theta_A$ is a water contact angle on the liquid layer, and

$\theta_B$ is a water contact angle on the surface of the container forming no liquid layer,

is not less than 0.35 over the whole inner surface of the blow-formed portion;

(5) The blow-formed container is formed as a unitary structure with its mouth portion being closed, and the liquid layer is formed on the inner surface thereof; and

(6) The liquid layer is so formed that the covering ratio F represented by the following formula (1),

$$F = (\cos\ \theta\ -\ \cos\ \theta_B)/(\cos\ \theta_A\ -\ \cos\ \theta_B)$$

wherein $\theta$ is a water contact angle on the inner surface of the container,

$\theta_A$ is a water contact angle on the liquid layer, and

$\theta_B$ is a water contact angle on the surface of the container forming no liquid layer,

is not less than 0.35 over the whole inner surface of the blow-formed portion, said blow-formed container being formed as a unitary structure with its mouth portion being closed, and said liquid layer being formed on the inner surface thereof.

Effects of the Invention:

The blow-formed container has a thin liquid layer formed on the inner surface thereof having a thickness or in an amount of not more than 10 $g/m^2$ (specifically, 0.1 to 10 $g/m^2$). Upon selecting a liquid (hereinafter often called lubricating liquid) which is immiscible with the content in the container, therefore, even a highly viscous content such as sauce or mayonnaise can be quickly discharged without adhering or staying on the inner surface of the container. That is, in discharging the content by inverting or tilting the container, the content falls down while coming in contact with the surface of the layer of the immiscible liquid. Namely, the content falls down in short periods of time and is effectively taken out from the container alleviating a probability that the content adheres and remains on the inner surface of the container.

Besides, in the invention, the liquid layer has a very small thickness, effectively prevents such an inconvenience that it is mixed into the content filled in the container to deteriorate the quality (e.g., flavor) of the content, is not scraped off by the content, and stably maintains lubricating property for the content for extended periods of time.

Moreover, the liquid layer is uniformly formed on the inner surface of the blow-formed container or, concretely, over the whole portion that is stretched by blow forming. Accordingly, the liquid layer exhibits lubricating property for the content homogeneously without dispersion, and effectively alleviates such an inconvenience that the content adheres and remains in part of the container.

The blow-formed container having the liquid layer on the inner surface thereof is produced by blowing a fluid for blow forming into a container preform under a condition where a liquid is present in space in the preform. Upon forming the container by blowing the fluid for blow forming under the condition where the liquid is present, the liquid is stretched as the container wall undergoes the stretching while being pushed onto the inner surface of the container due to the pressure of blow. As a result, it is made possible to uniformly form a thin layer of a small thickness on the inner surface of the container and, specifically, on the portion that is stretched by the blow-forming. If, for example, the liquid layer is formed by spraying the liquid or by dipping the container in the liquid after the container has been formed, the thickness of the liquid layer is subject to increase too much. According to the present invention, on the other hand, the liquid is stretched together with the container wall while being pushed onto the container wall, and the liquid layer is formed thinly and uniformly.

Brief Description of the Drawings:

[Fig. 1] : A partial sectional view showing the state of the inner surface of a blow-formed container produced according to the present invention.

[Fig. 2]: A view showing the appearance of an empty bottle that is directly blow-formed representing the most preferred embodiment of the blow-formed container.

Best Modes for Carrying Out the Invention:

<Production of blow-formed containers>

The blow-formed container is produced basically by extruding (extrusion-forming) or injecting (injection-forming) a molten resin (melt of a forming resin) to form a container preform in the same manner as in a conventional process and, thereafter, feeding a fluid for blow forming into the preform maintained at a predetermined blow-forming temperature to form the container. Here, in the present invention, the fluid for blow forming is fed in a state where the liquid for forming a predetermined liquid layer is present in space in the preform.

The form of the preform varies depending on the form of the container that is to be obtained. In the case of, for example, a biaxially stretched blow-formed container, the preform assumes the form of a test tube and includes, at an upper portion thereof, an unstretched portion (portion forming a thread for fastening a cap and a support ring) that becomes the mouth portion of the container. The preform of such a form is, usually, obtained by the injection forming.

For obtaining a directly blow-formed container, on the other hand, the preform has the shape of a pipe. For obtaining the container of the shape of, for example, a bottle, the preform is closed by being pinched off at a portion that becomes the bottom of the container. The preform of this form is obtained by the extrusion forming.

In the case of a preform for forming the directly blow-formed container for containing, specifically, foods, the preform is formed as a unitary structure that is closed at an upper portion of the unstretched portion that becomes the mouth portion so that it can be maintained sterilized until it is filled with the content. This is because the directly blow-formed container for containing foods is rich in flexibility, easily undergoes deformation, and the interior thereof cannot be easily sterilized.

Further, the closed portion at the upper end of the preform is formed by closing an extruded pipe-like resin melt simultaneously with the pinching off of the bottom portion by using a clamping mold through which a thin pipe (syringe) is extending to feed the fluid for blow forming. Therefore, a hole due to the thin pipe remains formed in the closed portion even after the container has been formed.

Further, not being limited to the single-layer structure, the preform may have a multilayer structure formed by using thermoplastic resins that can be blow-formed, as a matter course. The preform of the multilayer structure is formed by co-injection or co-extrusion based on a method known per se.

The container preform having the above form is blow-formed by being put into a blow metal mold heated at a blow forming temperature (concretely, at not lower than a glass transition temperature (Tg) of the resin for forming), and inserting in the preform a pipe for feeding a fluid for blow forming into the preform. Namely, due to the blow pressure of the fluid for blow forming, the preform (specifically, the portion except the mouth portion) undergoes the inflation, is cooled by the blow metal mold, and is shaped into a container. The container that is shaped has on its outer surface a parting line since it is shaped by using the metal mold.

The preform may be heated at the blow forming temperature in a manner of either heating again the preform that is once cooled after having been formed or heating again the preform that is in a state of being heated just after having been formed. In the ordinary direct blow forming, in general, the pipe-shaped preform that is in a molten state after having been extruded, is subjected to the blow forming in a blowing temperature region.

In the present invention, the fluid for blow forming is blown in a state where a predetermined liquid is present in the preform. The liquid can be fed by any means so far as the liquid is present in space in the preform when the fluid for blow forming is blown therein. Usually, there is preferably employed a method of feeding the liquid in the form of a mist together with the fluid for blow forming through the pipe for feeding the fluid for blow forming or a method of feeding the liquid into the inner surface by being extruded together with the resin that constitutes the container.

By blowing the fluid for blow forming as described above, the liquid fed into the preform is now spread together with the preform while being pushed onto the inner surface of the preform due to the blow pressure. The blow pressure is, usually, in a range of 0.2 to 5 MPa.

A layer of the liquid is thinly and uniformly formed on the whole inner surface (stretched portion) of the container that is blow-formed.

The container that is blow-formed is taken out from the blow metal mold. The empty container is then filled with a content, has its mouth portion closed with a cap, and is placed in the market.

<Blow-formed containers>

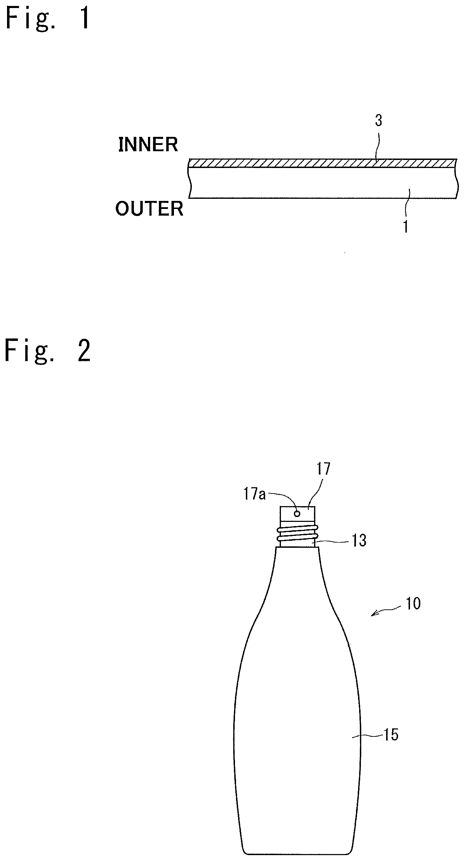

The container that is blow-formed as described above has, as shown in Fig. 1, a layer of the liquid uniformly formed over the whole inner surface (specifically, the blown portion) of the container wall 1.

Fig. 2 shows, for example, an empty container for foods that is directly blow-formed and to which the present invention is most desirably applied. The empty container generally designated at 10 has a threaded mouth portion 13 at the upper portion thereof and a layer 3 of the liquid formed on the inner surface of the blown portion (i.e., stretched portion inclusive of the body portion and the bottom portion formed so as to close the body portion) continuous to the mouth portion 13.

At the upper part of the mouth portion 13, further, there is formed a closing portion 17 to close it. A small hole 17a is formed in the closing portion 17 for inserting a pipe that is for feeding the fluid for blow forming. The small hole 17a is communicated with the interior of the empty container 10.

The empty container is supplied to the user where the closing part 17 is cut away, and is filled with the content in this state. Next, a cap is fastened to the mouth portion to hermetically seal the container which is then placed in the market.

The empty container 10 is formed in a manner as described above before it is filled with the content. This is because as described earlier, it is difficult to sterilize the interior of the container 10; i.e., it is for maintaining the sterilized state and for preventing the infiltration of foreign matter. Besides, use of the aseptic air for the blow forming prevents various germs in the air from entering into the bottle. Moreover, the liquid that comes in contact with the heated preform contributes to attaining the heat-sterilization.

In the container as described above, the liquid is made present in the preform at the time of blow forming. Therefore, the liquid layer 3 can be formed even in the empty container with its upper portion closed. For instance, if the liquid is fed by spraying or dipping, it is not allowed to form the liquid layer 3 in the empty container 10.

The content that is to be contained in the container is, preferably, a fluid substance that does not hold its shape but shows fluidity so as to utilize the slipping property of the liquid layer 3 to the greatest degree. Preferred examples are viscous paste-like or slurry fluid substances (e.g., those having a viscosity of not less than 100 mPa·s at 25°C) or, concretely, ketchup, aqueous paste, bees wax, sauces, mayonnaise, cosmetic liquid such as emulsion, liquid detergent, shampoo, rinse, conditioner, and the like. Namely, with the container, the liquid layer 3 exhibits good slipping property. Therefore, even the above viscous fluid substances can be quickly discharged without adhering or staying in the inner surface of the container by tilting or inverting the container. Specifically, with the above-mentioned directly blow-formed container for foods, the content can be discharged upon squeezing the body portion. Namely, ketchup and mayonnaise can be contained therein.

As the liquid for forming the liquid layer 3, on the other hand, there is used a liquid (lubricating liquid) that is not miscible with the content. The lubricating liquid, if it is miscible with the content, mixes with the content, escapes away from the inner surface of the container, and the liquid layer 3 disappears.

Here, the liquid immiscible with the content is the one that is not miscible with the content. Roughly speaking, an oleophilic liquid is used for the aqueous content, and water or a hydrophilic liquid is used for the oily content. Usually, there can be used, as the lubricating liquid, a liquid that sustains a covering ratio over the above-mentioned range (0.35 or more) at the time when the container is filled with the content. Specifically, the more different is the surface tension to the inner surface of the container (interfacial tension of the lubricating liquid to the inner surface of the container) from the surface tension to the content (interfacial tension of the lubricating liquid to the content), the higher the effect of lubrication, and for which the present invention is suited.

It is, further, desired that the lubricating liquid assumes a small thickness on the inner wall of the container. By using a capillary length $\kappa^{-1}$ of the lubricating liquid and the contact angle $\theta^*$ of the lubricating liquid on the resin forming the inner surface of the container, the critical value of thickness E of the lubricating liquid can be expressed by the following formula (2),

$$E = 2\kappa^{-1} \sin(\theta^*/2) \qquad\qquad (2)$$

In the present invention, it is desired to use a lubricating liquid that enables the thickness E to be decreased and, therefore, to use a lubricating liquid that has a small capillary length $\kappa^{-1}$ and a small contact angle $\theta^*$ on the resin that forms the inner surface of the container. Specifically, the lubricating liquid has a contact angle $\theta^*$ of 0 to 40 degrees and, preferably, 0 to 20 degrees on the resin that forms the inner surface of the container.

In the invention, further, the forming temperature during the blow forming is, generally, higher than room temperature and it is allowed to form a thin layer of liquid covering viscosities over a wider range than that attained by the spray-coating method or the like method. A majority proportion of the liquid exhibits viscosity that decreases with an increase in the temperature and spreads more easily during the blow forming enabling the liquid layer to be easily formed. It is desired that the liquid used in the present invention has a viscosity (at 23°C) of 1m Pa·s to 1000 mPa·s and, specifically, 10 mPa·s to 500 mPa·s.

Even by the spray-coating method, the viscosity of the liquid can be similarly decreased by increasing the temperature of the liquid. If the container on which the liquid layer is to be formed is made from a resin, however, blowing the liquid of a high temperature may cause the resin to be thermally deformed. Therefore, a limitation is imposed on the temperature that can be selected and, therefore, the liquid that is used exhibits only limited viscosities. Further, if it is attempted to decrease the thickness of the liquid layer formed on the inner surface of the container by the spray-coating method, then the liquid to be blown must be finely atomized. However, it is not easy to finely atomize the liquid unless it has a low viscosity, and it is difficult to form a thin liquid layer as has been well known.

From the above point of view, too, the present invention is very effective in forming a thin liquid layer on the inner surface of the blow-formed container.

The lubricating liquid is the one that is present in the form of a liquid at the blowing temperature (i.e., has a boiling point higher than the blowing temperature). If the boiling point is lower than the blowing temperature, the lubricating liquid volatilizes during the blow forming. Even if it has turned back again into the liquid after the temperature has lowered down to room temperature, the liquid layer 3 assumes irregular thickness and, depending on the cases, there develop spots where there is formed no liquid layer 3 at all.

From the above point of view, therefore, it is desired to select the lubricating liquid depending on the kind of the content contained in the container. As the lubricating liquid that can be most favorably used for the water-containing contents (e.g., ketchup), there can be exemplified silicone oil, fatty acid ester of glycerin, fluid paraffin, and edible fat and oil. Specifically preferred examples are fatty acid esters of glycerin as represented by intermediate-chain fatty acid triglyceride, glycerin trioleate, and glycerin diacetomonooleate, as well as fluid paraffin, and edible fat and oil. These substances volatilize little and have been approved as food additives, further, offering such advantages that they are odorless and do not impair the flavor of the content.

For the oily contents, there can be used water or a highly hydrophilic ionized liquid provided that its boiling point lies within the above-mentioned range.

For the emulsion-type fluid substances, there can be preferably used silicone oil, fatty acid ester of glycerin, fluid paraffin, or edible fat and oil.

In the invention, the liquid layer 3 formed by using the above-mentioned lubricating liquid is a thin layer of an amount of not more than 10 g/m$^2$ and, preferably, not more than 8 g/m$^2$. As described already, the liquid layer is uniformly formed over the whole inner surface of the blow-formed container. That is, in the invention, the above liquid (lubricating liquid) is made present in the preform at the time of blow forming and, therefore, it is allowed to uniformly form the thin liquid layer 3 over the whole inner surface of the container that is blow-formed. Namely, even if the liquid layer 3 is formed in a thickness larger than the above range, its lubricating property for the content is not so much improved. Rather if it is made present in excess amounts, then the lubricating liquid escapes and mixes as liquid lumps into the content. The present invention, on the other hand, effectively eliminates such an inconvenience.

The amount of the liquid layer 3 is, preferably, not less than 0.1 g/m$^2$, specifically, not less than 0.3 g/m$^2$ and, most desirably, not less than 0.5 g/m$^2$. This is because if the thickness is too small, the thickness becomes irregular and there may develop portions where there is no liquid layer 3 at all.

The thickness of the liquid layer 3 can be adjusted by setting the amount of the lubricating liquid fed during the blow forming to lie within a suitable range depending on the size of the area of the inner surface of the blow-formed container. The lubricating liquid of the above amount is pushed and spread over the whole inner surface of the blow-formed container to thereby form the liquid layer 3.

Further, the thickness of the liquid layer 3 of the blow-formed container can be calculated as the weight per a unit area by extracting the lubricating liquid forming the liquid layer 3 from the container by using a solvent miscible with the lubricating liquid and by measuring the weight thereof.

In the invention, further, the thin liquid layer 3 is so formed over the whole inner surface of the container that the covering ratio F represented by the following formula (1),

$$\mathrm{F} \;=\; (\cos\ \theta\ -\ \cos\ \theta_{\mathrm{B}})/(\cos\ \theta_{\mathrm{A}}\ -\ \cos\ \theta_{\mathrm{B}}) \qquad\qquad (1)$$

wherein $\theta$ is a water contact angle on the inner surface of the container,
$\theta_{\mathrm{A}}$ is a water contact angle on the liquid layer, and
$\theta_{\mathrm{B}}$ is a water contact angle on the surface of the container forming no liquid layer,

is not less than 0.35 over the whole inner surface of the container. For instance, if the body portion of the empty container containing no content is cut away at any 10 places each in a size of 2 cm x 2 cm and if the thus cut portions are measured for their covering ratios F, then every cut portion has a covering ratio F of not less than 0.35. It is, therefore, learned that the thin liquid layer 3 has been uniformly formed so as to cover the whole inner surface of the container.

In the present invention, the container can be formed by using various thermoplastic materials such as polyesters as represented by polyethylene terephthalate, and olefin resins, so far as they can be formed into the containers. Moreover, the container may have not only the single-layer structure but also a multilayer structure.

The container may, further, assume the form of bottle, cup or pouch. The pouch is a container prepared by using at least one or more pieces of film, and heat-sealing the peripheral edges of the film. The film for forming pouches is obtained by an inflation method by extruding the resin through a disk-like die or by a T-die method by extruding the resin through a T-die. The film that is obtained may or may not have been stretched.

Specifically, if the present invention is applied to directly blow-forming the container, there can be used a known olefin resin or a polyester resin as the resin for forming.

As the olefin resin, for instance, there can be used linear low-density polyethylene, straight-chain low-density polyethylene, intermediate- or high-density polyethylene, polypropylene, poly 1-butene, or poly 4-methyl-1-pentene. There can be, further, used a random or block copolymer of $\alpha$ -olefins, such as ethylene, propylene, 1-butene or 4-methyl-1-pentene, as a matter of course. Or there can be used a copolymer of ethylene and vinyl acetate, a copolymer of ethylene and (meth) acrylic acid ester, a copolymer of ethylene and (meth)acrylic acid, and a so-called ionomer resin of the (meth) acrylic acid which is crosslinked with metal ions. There can be, further, used a cyclic olefin copolymer disclosed in the above-mentioned patent document 1 (JP-A-2007-284066).

As the polyester resin, on the other hand, there can be exemplified polyethylene terephthalate, glycol-modified polyethylene terephthalate, polylactic acid, and polybutylene succinate.

Though there is no particular limitation on the multilayer structure, in the case of the directly blow-formed container, for example, it is necessary that the whole thickness of the container wall is so adjusted as to assure that the container can be squeezed.

In the case of bottles for containing shampoos and conditioners, for example, the two-layer structure can be employed; i.e., the innermost layer being formed by using the olefin resin and the layer on the outer side thereof being formed by using the high-density polyethylene.

As the intermediate layer in the multilayer structure, in general, there is formed a gas barrier layer by using a gas barrier resin such as ethylene vinyl alcohol copolymer (saponified product of an ethylene vinyl acetate copolymer) or aromatic polyamide and, most desirably, by using the ethylene vinyl alcohol copolymer. That is, by using the gas barrier resin for forming the intermediate layer, the intermediate layer is imparted with oxygen barrier property. Specifically, the ethylene vinyl alcohol copolymer exhibits very excellent oxygen barrier property and, therefore, makes it possible to effectively suppress the content from being deteriorated by oxygen that has permeated through and, at the same time, to excellently preserve the content.

Desirably, the gas barrier intermediate layer has a thickness in a range of, usually, 1 to 50 $\mu$m and, specifically, 9 to 40 $\mu$m.

Further, if the gas barrier resin is used as the intermediate layer, it is desired that the intermediate layer is provided via adhesive resin layers to increase adhesion to the inner and outer layers and to prevent delamination. The intermediate layer can thus be firmly adhered and secured to the inner and outer layers. The adhesive resin for forming adhesive layers has been known per se. For example, there can be used, as the adhesive resin, a resin that contains the carbonyl group (>C=O) in the main chain or side chain thereof in an amount of 1 to 100 meq/100 g of the resin and, specifically, 10 to 100 meq/100 g of the resin. Concretely, there can be used an olefin resin graft-modified with a carboxylic acid such as maleic acid, itaconic acid or fumaric acid or an anhydride thereof, or graft-modified with amide or ester; an ethylene-acrylic acid copolymer; an ionically crosslinked olefin copolymer; or an ethylene-vinyl acetate copolymer. The adhesive resin layer has a thickness for attaining a suitable degree of adhering force, which is usually, about 0.5 to about 20 $\mu$m and, preferably, about 1 to about 8 $\mu$m.

In the above container of the multilayer structure, it is also allowable to form a layer of a reground resin obtained by mixing the scrap resin that generates when the container is formed into the virgin resin that forms the outermost layer. In this case, from the standpoint of reutilizing the resources yet maintaining the formability, the scrap resin is used, desirably, in an amount of about 10 to about 60 parts by weight per 100 parts by weight of the virgin resin that forms the outermost layer. The thickness of the layer adjoining the outermost layer may vary depending on the size of the packing container or the kind of the content. The thickness, however, should be such that the whole thickness of the container wall is not unnecessarily large yet permitting the scrap resin to be efficiently utilized, and is, usually, set to be about 20 to about 400 $\mu$m.

EXAMPLES

The invention will now be described by way of Examples.

Described below are a variety of properties, methods of measuring properties and resins used for forming the containers (bottles) in Examples described below.

1. Measuring the ratio of covering with liquid.

Test pieces each measuring 20 mm x 20 mm were cut out from given ten points of the body portions of the bottles having a capacity of 500 g formed by the methods described later. By using a solid-liquid interface analysis system, DropMaster 700 (manufactured by Kyowa Kaimen Kagaku Co.) under a condition of 23°C50%RH, the test pieces were so fixed that the inner layers thereof were facing upward. Pure water of 3 $\mu$L was placed on each test piece and was measured for its water contact angle $\theta$. By using the obtained water contact angles, the ratio F of covering the inner surface of the bottle with the lubricating liquid was found according to the following formula (1),

$$\mathrm{F} = (\cos\ \theta\ -\ \cos\ \theta_\mathrm{B})/(\cos\ \theta_\mathrm{A}\ -\ \cos\ \theta_\mathrm{B}) \qquad\qquad (1)$$

wherein $\theta$ is a water contact angle on the inner surface of the container,
$\theta_\mathrm{A}$ is a water contact angle on the liquid layer, and
$\theta_\mathrm{B}$ is a water contact angle on the surface of the container forming no liquid layer.

In finding the ratio F of covering with the lubricating liquid, the following water contact angles were used as the values of $\theta_\mathrm{A}$ and $\theta_\mathrm{B}$.

$\theta_\mathrm{B}$: 100.1° (value with a high-pressure low-density polyethylene (MFR = 0.3) alone)
$\theta_\mathrm{B}$: 93.5° (value with a cyclic olefin type polymer alone)
$\theta_\mathrm{B}$: 72.0° (value with a glycol-modified polyethylene terephthalate alone)
$\theta_\mathrm{B}$: 65.8° (value with a polyethylene terephthalate alone)
$\theta_\mathrm{A}$: 80.3° (value on a liquid film of intermediate-chain fatty acid triglyceride)

2. Measuring the amount of the liquid layer that is covering.

There were formed bottles of a capacity of 500 g by the methods that will be described later. A liquid layer (layer of a lubricating liquid) formed on the inner surface of the container was recovered by using 30 mL of a solvent (heptane) miscible with the lubricating liquid and was concentrated by using an evaporator. The residue was transferred onto an evaporating dish to find the weight of the component of the liquid layer. The weight that was found was divided by the area of the inner surface of the container and was regarded to be the weight of the liquid layer (g/m$^2$) covering the inner surface of the bottle. The smaller the value, the smaller the thickness of the liquid layer formed on the inner surface of the container.

3. Measuring the contact angle $\theta^*$ of the lubricating liquid on the resin forming the inner surface of the container.

Containers (bottles) of various layer constitutions but without liquid layer were formed by the methods that will be described later. Test pieces measuring 20 mm x 70 mm were cut out from the body portions of the bottles that were formed. By using the solid-liquid interface analysis system, DropMaster 700 (manufactured by Kyowa Kaimen Kagaku Co.) under the condition of 23°C50%RH, the test pieces were so fixed that the inner layers thereof were facing upward. The lubricating liquid of 2 $\mu$L was placed on each test piece and was measured for its water contact angle $\theta^*$ on the resin forming the inner surface of the container.
The smaller the value, it can be said that lubricating liquid is more suited for forming the layer in a reduced thickness.

4. Measuring the slip-down speed of the fluid contents.

Test pieces measuring 20 mm x 70 mm were cut out from the body portions of the bottles of a capacity of 500 g prepared by the methods described below. By using the solid-liquid interface analysis system, DropMaster 700 (manufactured by Kyowa Kaimen Kagaku Co.) under the condition of 23°C50%RH, the test pieces were so fixed that the inner layers thereof were facing upward. The fluid content of an amount of 70 mg was placed on each test piece and a slip-down behavior thereof at an inclination of 45° was photographed by using a camera. The slip-down behavior was analyzed, and the slip-down speed was calculated from the plots of moving distances vs. times. The slip-down speed was regarded to be an index of slip-down property. The larger the slip-down speed, it can be said that the more excellent slipping property is exhibited for the content. There were used the following fluid contents. The contents were, further, measured for their viscosities at 25°C by using a tuning fork oscillator type viscometer SV-10 (manufactured by A & D Co.). Fluid contents that were used:

Kewpie-Half (produced by Kewpie Co., Viscosity = 1260 mPa·s).
Ketchup (produced by Kagome Co., viscosity = 1050 mPa·s)

Okonomi Sauce (produced by Otafuku Co., Viscosity = 560 mPa·s)

5. Evaluating the appearance of the bottles.

The bottles prepared by the methods described below were evaluated with the eye for the presence of pool of lubricating liquid on the inner surfaces of the bottles. The bottles that developed no liquid pool were evaluated to be ○ and the bottles that developed liquid pool were evaluated to be ×. The bottles that develop no liquid pool are good bottles.

<Resins for forming the innermost layer>

High-pressure low-density polyethylene (LDPE)

MFR; 0.3 g/10 min.
Density; 0.92 g/cm$^3$

Cyclic olefin copolymer.
(COC, ethylene-tetracyclododecene copolymer)

Tg; 80°C
Density; 1.02 g/cm$^3$

Glycol-modified polyethylene terephthalate (PETG)

Tg; 80°C
Density; 1.27 g/cm$^3$

<Resin for forming the outermost layer>

High-pressure low-density polyethylene (LDPE).
MFR; 0.4 g/10 min.

<Resins for forming the adhesive layer>

Maleic anhydride-modified polyethylene
Modified polyolefin

<Resin for forming gas barrier layer>

Ethylene vinyl alcohol copolymer
(Density 1.20 g/cm$^3$, Tg 60°C)

<Lubricating liquid>

Intermediate-chain fatty acid triglyceride

Surface tension (23°C) ; 28.8 mN/m
Viscosity (23°C) ; 33.8 mPa- s
Boiling point; 210°C or higher
Inflammation point; 242°C (reference value)

The surface tension of the lubricating liquid is a value measured at 23°C by using the solid-liquid interface analysis system, DropMaster 700 (manufactured by Kyowa Kaimen Kagaku Co.). The density of the liquid necessary for measuring the surface tension of the liquid is a value measured at 23°C by using the density/specific gravity meter DA-130 (manufactured by Kyoto Denshi Kogyo Co.). Further, the viscosity of the lubricating liquid is a value measured at 23°C by using the tuning fork oscillator type viscometer SV-10 (manufactured by A & D Co.).

<Example 1>

The low-density polyethylene (MFR = 0.3) for forming the innermost layer was fed into a 50-mm extruder, the low-density polyethylene (MFR = 0.4) for forming the outermost layer was fed into a 40-mm extruder, the maleic anhydride-modified polyethylene for forming the adhesive layers was fed into a 30-mm extruder A, and the ethylene vinyl alcohol copolymer for forming the gas barrier layer was fed into a 30-mm extruder B, all in the form of pellets. As the liquid layer material for covering the innermost surface of the parison, further, the intermediate-chain fatty acid triglyceride was fed by using a pump. A molten parison thereof was extruded through a multilayer die head maintained at a temperature of 210°C, and was directly blow-formed in a customary manner at a metal mold temperature of 20°C under a blowing pressure of 0.7 MPa to obtain a 5-kind-6-layer (inclusive of the liquid layer) multilayer bottle having a capacity of 500 g and weighing 24 g.
The bottle possessed the following constitution.
Liquid layer/innermost resin layer/adhesive layer/gas barrier layer/adhesive layer/outermost resin layer.
The obtained bottle was measured for the covering ratio with the liquid, the amount of the liquid layer that was covering and the slip-down speed of the fluid content, and was evaluated for its appearance. The results were as collectively shown in Table 1.
A bottle was, further, formed without feeding the liquid, and a contact angle $\theta^*$ of the liquid was measured on the resin that was forming the inner surface of the container. The result was as shown in Table 1.

<Example 2>

A 5-kind-6-layer (inclusive of the liquid layer) multilayer bottle was prepared in the same manner as in, and by using the same materials as those of, Example 1 but changing the amount of the liquid layer material that was fed for covering the innermost surface of the container.
The obtained bottle was measured for the covering ratio with the liquid, the amount of the liquid layer that was covering and the slip-down speed of the fluid content, and was evaluated for its appearance. Further, the contact angle $\theta^*$ of the lubricating liquid was measured in the same manner as in Example 1. The results were as collectively shown in Table 1.

<Example 3>

The cyclic olefin copolymer (COC) for forming the innermost layer was fed into the 40-mm extruder, the low-density polyethylene (MFR = 0.4) for forming the outermost layer was fed into the 50-mm extruder, the maleic anhydride-modified polyethylene for forming the adhesive layers was fed into the 30-mm extruder A, and the ethylene vinyl alcohol copolymer for forming the gas barrier layer was fed into the 30-mm extruder B, all in the form of pellets. As the liquid layer material for covering the innermost surface of the parison, further, the intermediate-chain fatty acid triglyceride was fed by using the pump. A molten parison thereof was extruded through the multilayer die head maintained at a temperature of 210°C, and was directly blow-formed in a customary manner at a metal mold temperature of 22°C under a blowing pressure of 0.7 MPa to obtain a 5-kind-6-layer (inclusive of the liquid layer) multilayer bottle having a capacity of 500 g and weighing 22 g.
The bottle possessed the following constitution.
Liquid layer/innermost resin layer/adhesive layer/gas barrier layer/adhesive layer/outermost resin layer.
The obtained bottle was measured for the covering ratio with the liquid and the amount of the liquid layer that was covering in the same manner as in Example 1, and was evaluated for its appearance. Further, the contact angle $\theta^*$ of the lubricating liquid was measured in the same manner as in Example 1. The results were as collectively shown in Table 1.

<Example 4>

The glycol-modified polyethylene terephthalate (PETG) for forming the innermost layer was fed into the 40-mm extruder, the low-density polyethylene (MFR = 0.4) for forming the outermost layer was fed into the 50-mm extruder, and the modified polyethylene for forming the adhesive layer was fed into the 30-mm extruder A, all in the form of pellets. As the liquid layer material for covering the innermost surface of the parison, further, the intermediate-chain fatty acid triglyceride was fed by using the pump. A molten parison thereof was extruded through the multilayer die head maintained at a temperature of 210°C, and was directly blow-formed in a customary manner at a metal mold temperature of 22°C under a blowing pressure of 0.7 MPa to obtain a 4-kind-4-layer (inclusive of the liquid layer) multilayer bottle having a capacity of 500 g and weighing 22 g.

The bottle possessed the following constitution.

Liquid layer/innermost resin layer/adhesive layer/outermost resin layer.

The obtained bottle was measured for the covering ratio with the liquid and the amount of the liquid layer that was covering in the same manner as in Example 1, and was evaluated for its appearance. Further, the contact angle $\theta^*$ of the lubricating liquid was measured in the same manner as in Example 1. The results were as collectively shown in Table 1.

<Example 5>

By using an injection-forming machine (NN75JS, manufactured by Niigata Tekkosho Co.), the polyethylene terephthalate (PET) resin that has been dried was injection-formed under the conditions of a barrel setpoint temperature of 280°C and a cycle time of 30 seconds to form an amorphous preform of a single layer of PET weighing 24 g (for forming a 500-mL PET bottle).

As the liquid layer material, the intermediate-chain fatty acid triglyceride was applied onto the inner surface of the thus formed preform which was then biaxially stretch-blow-formed in a customary manner at a preform temperature of 100 degrees and a blowing pressure of 3.5 MPa to obtain a biaxially stretch-blow-formed bottle of a capacity of 500 ml that had been stretched 3 times longitudinally, 3 times transversely and 9 times in area.

The obtained bottle was measured for the covering ratio with the liquid and the amount of the liquid layer that was covering in the same manner as in Example 1, and was evaluated for its appearance. Further, the contact angle $\theta^*$ of the lubricating liquid was measured in the same manner as in Example 1. The results were as collectively shown in Table 1.

<Comparative Example 1>

The low-density polyethylene (MFR = 0.3) for forming the innermost layer was fed into the 50-mm extruder, the low-density polyethylene (MFR = 0.4) for forming the outermost layer was fed into the 40-mm extruder, the maleic anhydride-modified polyethylene for forming adhesive layers was fed into the 30-mm extruder A and the ethylene vinyl alcohol copolymer for forming the gas barrier layer was fed into the 30-mm extruder A, all in the form of pellets. A molten parison thereof was extruded through the multilayer die head maintained at a temperature of 210°C, and was directly blow-formed in a customary manner at a metal mold temperature of 20°C under a blowing pressure of 0.7 MPa to obtain a 4-kind-5-layer multilayer bottle having a capacity of 500 g and weighing 24 g.

The bottle possessed the following constitution.

Innermost resin layer/adhesive layer/gas barrier layer/adhesive layer/outermost resin layer.

The closed portion in the mouth portion of the obtained bottle was cut out, and the intermediate-chain fatty acid triglyceride was applied onto the inner surface of the bottle by the spray-coating method. After having been applied therewith, the mouth portion was held facing downward for 3 minutes to remove excess of the intermediate-chain fatty acid triglyceride.

The obtained bottle was measured for the covering ratio with the liquid, the amount of the liquid layer that was covering, the contact angle $\theta^*$ of the lubricating liquid on the resin that was forming the inner surface of the container and the slip-down speed of the fluid content, and was evaluated for its appearance. The results were as collectively shown in Table 1.

<Comparative Example 2>

A 4-kind-5-layer multilayer bottle was prepared in the same manner as in Comparative Example 1. The bottle possessed the following constitution.

Innermost resin layer/adhesive layer/gas barrier layer/adhesive layer/outermost resin layer.

Without covering the inner surface with the liquid, the bottle was measured for its slip-down speed of the fluid content, and was evaluated for its appearance. The results were as collectively shown in Table 1.

EP 2 990 176 B1

Table 1

| | Innermost resin layer | Lubricating liquid | Amount of liquid layer $(g/m^2)$ | Contact angle θ* of lubr. liquid (deg) |
|---|---|---|---|---|
| Ex. 1 | LDPE | intmd-chain fatty acid triglyceride | 9.38 | 8.3 |
| Ex. 2 | LDPE | intmd-chain fatty acid triglyceride | 7.84 | 8.3 |
| Ex. 3 | COC | intmd-chain fatty acid triglyceride | 4.88 | 13.6 |
| Ex. 4 | PETG | intmd-chain fatty acid triglyceride | 1.22 | 9.4 |
| Ex. 5 | PET | intmd-chain fatty acid triglyceride | 0.34 | 6.9 |
| Comp. Ex. 1 | LDPE | intmd-chain fatty acid triglyceride | 44.42 | 8.3 |
| Comp. Ex. 2 | LDPE | none | - | - |

In Table, "-" represents no presence or no experimental data.

Table 1 (continued)

| | Covering ratio F with liquid | | | | | | | Fall-down speed (mm/min) | | | Appearance of bottle |
|---|---|---|---|---|---|---|---|---|---|---|---|
| | Measured (N = 10) | | | | | Ave. value | Stdrd deviation | Kewpie-Half | Ketchup | Okonomi Sauce | |
| Ex. 1 | 0.81 | 0.75 | 0.82 | 0.73 | 0.75 | 0.80 | 0.056 | 12.2 | 46.7 | 13.9 | ◯ |
| | 0.77 | 0.91 | 0.86 | 0.8 | 0.83 | | | | | | |
| Ex. 2 | 0.77 | 0.38 | 0.81 | 0.75 | 0.75 | 0.71 | 0.136 | 11.0 | 51.9 | 18.7 | ◯ |
| | 0.81 | 0.82 | 0.73 | 0.58 | 0.73 | | | | | | |
| Ex. 3 | 0.82 | 0.83 | 0.86 | 0.77 | 0.59 | 0.78 | 0.078 | − | − | − | ◯ |
| | 0.82 | 0.73 | 0.81 | 0.75 | 0.81 | | | | | | |
| Ex. 4 | 0.99 | 0.87 | 0.94 | 0.88 | 1 | 0.92 | 0.068 | − | − | − | ◯ |
| | 0.98 | 1 | 0.82 | 0.87 | 0.87 | | | | | | |
| Ex. 5 | 0.99 | 0.95 | 0.92 | 0.99 | 0.77 | 0.90 | 0.085 | − | − | − | ◯ |
| | 0.95 | 0.93 | 0.81 | 0.91 | 0.77 | | | | | | |
| Comp. Ex. 1 | 0.78 | 0.85 | 0.8 | 0.71 | 0.77 | 0.70 | 0.099 | 45.1 | 66.4 | 34.9 | × |
| | 0.55 | 0.68 | 0.65 | 0.61 | 0.6 | | | | | | |
| Comp. Ex. 2 | − | − | − | − | − | − | − | 1.0 | 0.2 | 1.1 | ◯ |
| | − | − | − | − | − | | | | | | |

In Table, "-" represents no presence or no experimental data.

From Table 1, it is learned that in Examples 1 to 5 that have blow-formed the bottles in a state where the liquid was present on the inner surface of the preforms, a liquid layer was formed in a thickness of not more than 10 g/m$^2$ on the inner surface of the bottles. In Comparative Example 1 in which the liquid layer was formed on the inner surface of the bottle by spray coating after the bottle has been formed, on the other hand, the liquid layer was formed in a thickness of as large as 44 g/m$^2$. It is, therefore, confirmed that the method of Examples of the invention is very effective in forming a thin liquid layer on the inner surfaces of the bottles. Further, if Examples 1 and 2 are compared with Comparative Example 1 in regard to the ratio F of covering the inner surfaces of the bottles with the liquid, it is learned that the Examples are attaining the covering ratios equivalent to or better than that of the Comparative Example.

It can, therefore, be said that in forming the liquid layer on the inner surfaces of the bottles, the present invention makes it possible to decrease the thickness of the liquid layer without lowering the covering ratio.

As for the slip-down speed of the fluid content, Comparative Example 2 without forming the liquid layer exhibits a small slip-down speed for any content meaning that the slip-down property is poor. On the other hand, the bottles forming the liquid layer exhibit slip-down speeds that are more than 10 times as high for any content, featuring excellent slipping property.

As for the appearance of the bottles, no liquid pool occurred in Comparative Example 2 that formed no liquid layer or in Examples 1 to 5 that formed the liquid layer in amounts of not more than 10 g/m$^2$. The liquid pool, however, occurred in Comparative Example 1 that formed the liquid layer in an amount of as large as 44 g/m$^2$. It is, therefore, learned that the amount of the liquid layer covering the inner surfaces of the bottles must be decreased in order to suppress the occurrence of the liquid pool.

From the above results, it is obvious that upon forming the liquid layer in a thickness as small as not more than 10 g/m$^2$ on the inner surfaces of the bottles, it is made possible to provide the bottles having excellent slipping property without developing liquid pool on the inner surfaces of the bottles.

Description of Reference Numerals:

1:     container wall
3:     liquid layer
10:    empty container
13:    mouth portion
15:    blow-formed portion
17:    closed portion

**Claims**

1. A process for producing a blow-formed container [10] having a liquid layer [3] formed in an amount of not more than 10 g/m$^2$ on the whole inner surface of the stretched portion thereof, wherein said liquid layer [3] is formed of a liquid having a boiling point higher than a blowing temperature, and wherein a contact angle $\theta^*$ of said liquid is not more than 40 degrees on the resin that is forming the innermost layer; wherein said process comprises blowing a fluid for blow forming into a container preform formed by extruding or injecting a molten resin to form the container preform into the shape of a container, wherein the fluid for blow forming is blown under a condition where said liquid is present in space in said preform.

2. The process according to claim 1, wherein said liquid is fed into the space in said preform together with the fluid for blow forming.

3. The process according to claim 1, wherein the fluid for blow forming is blown in a state where the inner surface of the container preform has been coated with said liquid.

4. The process according to claim 1, wherein the liquid forming said liquid layer [3] has a viscosity of 1 to 1000 mPa·s (23°C).

5. The process according to claim 1, wherein said liquid layer [3] is so formed that the covering ratio F represented by the following formula (1),

$$F = (\cos\ \theta\ -\ \cos\ \theta_B)/(\cos\ \theta_A\ -\ \cos\ \theta_B) \qquad\qquad (1)$$

wherein $\theta$ is a water contact angle on the inner surface of the container [10],
$\theta_A$ is a water contact angle on the liquid layer [3], and
$\theta_B$ is a water contact angle on the surface of the container [10] forming no liquid layer [3],

is not less than 0.35 over the whole inner surface of the blow-formed portion [15].

6. The process according to claim 1, wherein said blow-formed container [10] is formed as a unitary structure with its mouth portion [13] being closed, and the liquid layer [3] is formed on the inner surface thereof.

7. The process according to claim 1, wherein said liquid layer [3] is so formed that the covering ratio F represented by the following formula (1),

$$F = (\cos\ \theta\ -\ \cos\ \theta_B)/(\cos\ \theta_A\ -\ \cos\ \theta_B)$$

wherein $\theta$ is a water contact angle on the inner surface of the container [10],
$\theta_A$ is a water contact angle on the liquid layer [3], and
$\theta_B$ is a water contact angle on the surface of the container [10] forming no liquid layer [3],

is not less than 0.35 over the whole inner surface of the blow-formed portion [15], said blow-formed container [10] being formed as a unitary structure with its mouth portion [13] being closed, and said liquid layer [3] being formed on the inner surface thereof.

**Patentansprüche**

1. Verfahren zum Herstellen eines blasgeformten Behälters [10] mit einer Flüssigkeitsschicht [3], die in einem Betrag von nicht mehr als 10 g/m$^2$ auf der gesamten Innenfläche des gestreckten Abschnitts davon gebildet wird, wobei die Flüssigkeitsschicht [3] aus einer Flüssigkeit mit einem Siedepunkt, der höher ist als eine Blastemperatur, gebildet wird, und wobei ein Kontaktwinkel $\theta$ * der Flüssigkeit auf dem Harz, das die innerste Schicht bildet, nicht mehr als 40 Grad beträgt;
wobei das Verfahren das Blasen eines Fluids zum Blasformen in eine Behältervorform umfasst, die durch das Extrudieren oder Einführen eines geschmolzenen Harzes gebildet ist, um die Behältervorform in die Form eines Behälters zu formen, wobei das Fluid zum Blasformen unter einem Zustand geblasen wird, in dem die Flüssigkeit in Raum in der Vorform vorhanden ist.

2. Verfahren nach Anspruch 1, wobei die Flüssigkeit zusammen mit dem Fluid zum Blasformen in den Raum in der Vorform zugeführt wird.

3. Verfahren nach Anspruch 1, wobei das Fluid zum Blasformen in einem Zustand geblasen wird, in dem die Innenfläche der Behältervorform mit der Flüssigkeit beschichtet wurde.

4. Verfahren nach Anspruch 1, wobei die Flüssigkeit, welche die Flüssigkeitsschicht [3] bildet, eine Viskosität von 1 bis 1000 MPa·s (23 °C) aufweist.

5. Verfahren nach Anspruch 1, wobei die Flüssigkeitsschicht [3] derart gebildet wird, dass das Deckungsverhältnis F, das durch die folgende Formel (1) dargestellt wird,

$$F = (\cos\ \theta\ -\ \cos\ \theta_B)/(\cos\ \theta_A\ -\ \cos\ \theta_B) \qquad\qquad (1)$$

wobei $\theta$ ein Wasserkontaktwinkel auf der Innenfläche des Behälters [10] ist,
$\theta_A$ ein Wasserkontaktwinkel auf der Flüssigkeitsschicht [3] ist und
$\theta_B$ ein Wasserkontaktwinkel auf der Innenfläche des Behälters [10], die keine Flüssigkeitsschicht [3] bildet, ist, der nicht kleiner ist als 0,35 über der gesamten Innenfläche des blasgeformten Abschnitts [15] ist.

6. Verfahren nach Anspruch 1, wobei der blasgeformte Behälter [10] als eine einheitliche Struktur gebildet ist, wobei sein Mündungsabschnitt [13] geschlossen ist und die Flüssigkeitsschicht [3] auf der Innenfläche davon gebildet ist.

7. Verfahren nach Anspruch 1, wobei die Flüssigkeitsschicht [3] derart gebildet ist, dass das Deckungsverhältnis F, das durch die folgende Formel (1) dargestellt wird,

$$F = (\cos \theta - \cos \theta_B) / (\cos \theta_A - \cos \theta_B)$$

wobei $\theta$ ein Wasserkontaktwinkel auf der Innenfläche des Behälters [10] ist,
$\theta_A$ ein Wasserkontaktwinkel auf der Flüssigkeitsschicht [3] ist und
$\theta_B$ ein Wasserkontaktwinkel auf der Innenfläche des Behälters [10], die keine Flüssigkeitsschicht [3] bildet, ist, der nicht kleiner als 0,35 über der gesamten Innenfläche des blasgeformten Abschnitts [15] ist, wobei der blasgeformte Behälter [10] als eine einheitliche Struktur gebildet ist, wobei sein Mündungsabschnitt [13] geschlossen ist und die Flüssigkeitsschicht [3] auf der Innenfläche davon gebildet ist.

## Revendications

1. Procédé pour produire un contenant formé par soufflage [10] possédant une couche liquide [3] formée en une quantité non supérieure à 10 g/m$^2$ sur la surface intérieure entière de la portion étirée de celui-ci, dans lequel ladite couche liquide [3] est formée d'un liquide possédant un point d'ébullition supérieur à une température de soufflage, et dans lequel un angle de contact $\theta *$ dudit liquide n'est pas supérieur à 40 degrés sur la résine qui forme la couche la plus intérieure ;
dans lequel ledit procédé comprend le soufflage d'un fluide pour le formage par soufflage en une préforme de contenant formée en extrudant ou injectant une résine fondue pour former la préforme de contenant en la forme d'un contenant, dans lequel le fluide pour le formage par soufflage est soufflé dans une condition où ledit liquide est présent dans un espace dans ladite préforme.

2. Procédé selon la revendication 1, dans lequel ledit liquide est distribué dans l'espace dans ladite préforme conjointement avec le fluide pour le formage par soufflage.

3. Procédé selon la revendication 1, dans lequel le fluide pour le formage par soufflage est soufflé dans un état où la surface intérieure de la préforme de contenant a été enduite avec ledit liquide.

4. Procédé selon la revendication 1, dans lequel le liquide formant ladite couche liquide [3] possède une viscosité de 1 à 1000 mPa·s (23°C).

5. Procédé selon la revendication 1, dans lequel ladite couche liquide [3] est formée de telle sorte que le rapport de couverture F représenté par la formule suivante (1),

$$F = (\cos \theta - \cos \theta_B) / (\cos \theta_A - \cos \theta_B) \qquad (1)$$

dans lequel $\theta$ est un angle de contact d'eau sur la surface intérieure du contenant [10],
$\theta_A$ est un angle de contact d'eau sur la couche liquide [3], et
$\theta_B$ est un angle de contact d'eau sur la surface du contenant [10] ne formant aucune couche liquide [3], n'est pas inférieur à 0,35 sur la surface intérieure entière de la portion formée par soufflage [15].

6. Procédé selon la revendication 1, dans lequel ledit contenant formé par soufflage [10] est sous forme de structure unitaire avec sa portion de goulot [13] fermée, et la couche liquide [3] est formée sur la surface intérieure de celui-ci.

7. Procédé selon la revendication 1, dans lequel ladite couche liquide [3] est formée de telle sorte que le rapport de couverture F représenté par la formule suivante (1),

$$F = (\cos \theta - \cos \theta_B) / (\cos \theta_A - \cos \theta_B)$$

dans lequel $\theta$ est un angle de contact d'eau sur la surface intérieure du contenant [10],
$\theta_A$ est un angle de contact d'eau sur la couche liquide [3], et
$\theta_B$ est un angle de contact d'eau sur la surface du contenant [10] ne formant aucune couche liquide [3],
n'est pas inférieur à 0,35 sur la surface intérieure entière de la portion formée par soufflage [15], ledit contenant formé par soufflage [10] étant sous forme de structure unitaire avec sa portion de goulot [13] fermée, et ladite couche liquide [3] étant formée sur la surface intérieure de celui-ci.

Fig. 1

INNER

3

OUTER

1

Fig. 2

17

17a

13

10

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012199236 A
- JP 2013023468 A
- JP 2007284066 A
- JP 2008222291 A
- JP 2009214914 A
- JP 6345903 A
- WO 2012137755 A
- JP H08113244 B
- WO 2007120807 A
- EP 2123571 A